# EUROPEAN PATENT APPLICATION

(11) **EP 1 830 445 A1**
(43) Date of publication of application: **05.09.2007**
(21) Application number: 05800327.8
(22) Date of filing: 04.11.2005
(51) Int. Cl.: H02G 15/34, H01B 12/02

(54) **POWER LEAD-OUT STRUCTURE OF SUPERCONDUCTING APPARATUS**

(30) Priority: 21.12.2004 JP 2004369149
(71) Applicant: Sumitomo Electric Industries, Ltd., Osaka-shi, Osaka 541-0041 (JP)
(72) Inventor: HIROSE, Masayuki, (JP)
(74) Representative: Kreutzer, Ulrich
(86) International application number: PCT/JP2005/020292
(87) International publication number: WO 2006/067915

(57) **Abstract**

An electric power feed structure for a superconducting apparatus, which is used to input or output electric power between the cryogenic-temperature side and the room-temperature side, comprises a coolant vessel containing a superconducting section provided in the superconducting apparatus, a vacuum thermal insulation vessel arranged to surround the outer periphery of the coolant vessel, and a feed conductor part having one end arranged in the room temperature side and having the other end connected to the superconducting section. The feed conductor part is divided into a cryogenic-temperature side conductor connected to the superconducting section and a room-temperature side conductor arranged in the room temperature side such that the cryogenic-temperature side conductor and the room-temperature side conductor can be detachably attached to each other. Thus, provided are the electric power feed structure for a superconducting apparatus and a superconducting cable line equipped with the electric power feed structure in which the electric power fed between the cryogenic-temperature side and the room-temperature side can be easily varied by changing an effective conductor cross-sectional area.

## Description

### Technical Field

The present invention relates to an electric power feed structure for transfer of electric power which is provided between the cryogenic temperature side and the room temperature side in a superconducting apparatus. The invention also relates to a superconducting cable line equipped with the electric power feed structure. More particularly, the present invention relates to an electric power feed structure which is provided in a superconducting apparatus and which is capable of easily changing electric power to be fed.

### Background Art

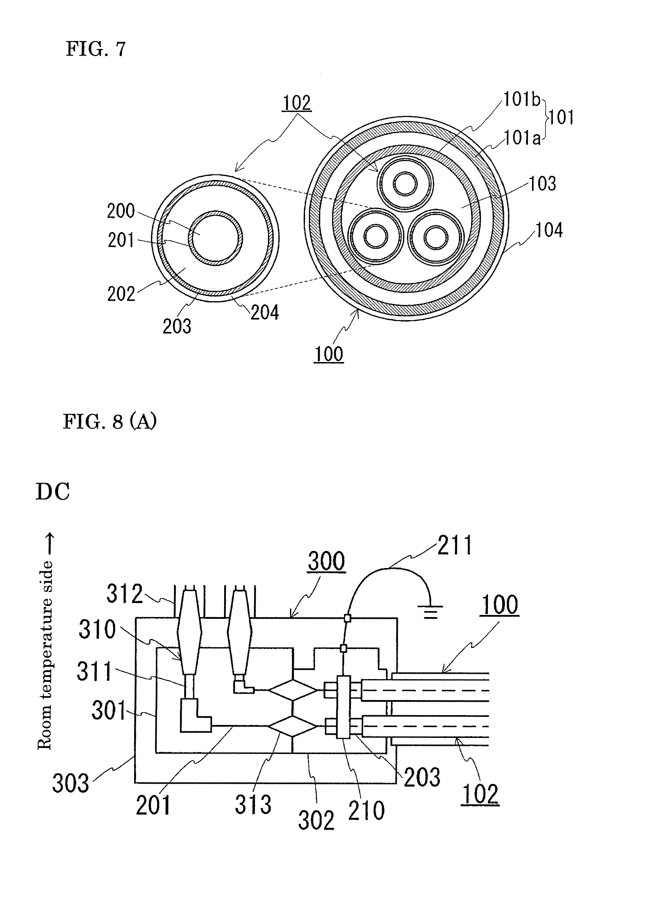

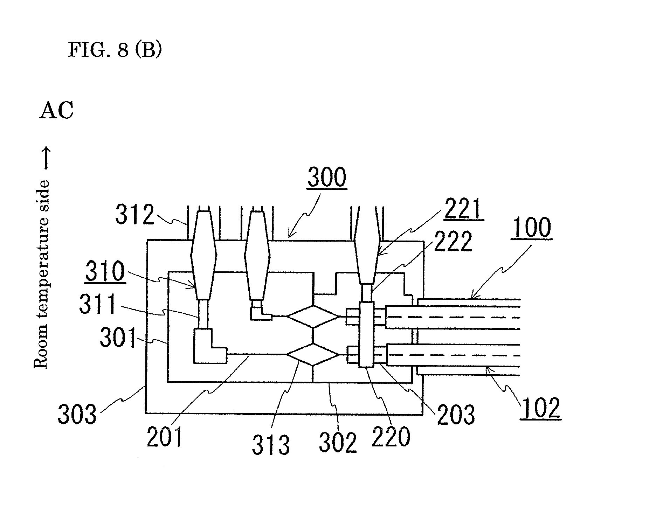

Various types of superconducting apparatuses have been researched in which a superconducting section made of a superconducting material can be made to exhibit a superconducting state by cooling with a coolant, thereby reducing or substantially eliminating electric resistance. For example, one of such superconducting apparatuses is a superconducting cable having a superconducting conductor and a superconducting shielding layer, and other examples are a superconducting fault current limiter, a superconducting transformer, and a superconducting magnetic energy storage (SMES) device, in which a superconducting coil is provided. In such a superconducting apparatus, a feed structure for inputting and outputting electric power between the cryogenic temperature side and the room temperature side is generally formed at the end of a superconducting section, that is, at the end of a superconducting conductor or a superconducting coil. For example, in a superconducting cable shown in Fig. 7, feed structures such as shown in Figs. 8(A) and 8(B) are formed. Figure 7 schematically shows a cross-section of a superconducting cable of three-core in one cryostat type, and Figure 8 shows a termination structure for the superconducting cable of three-core in one cryostat type; specifically, Fig. 8(A) represents the termination structure in the case of an AC line, and Fig. 8(B) represents the termination structure in the case of a DC line.

The superconducting cable 100 is structured such that three cable cores 102 are disposed in a thermally insulated pipe 101. Each core 102 comprises a former 200, a first superconducting layer 201, an electrical insulation layer 202, a second superconducting layer 203, and a protection layer 204, which are arranged in this order from the center. The first superconducting layer 201 and the second superconducting layer 203 are each made of a superconducting material. In the case of three-phase AC power transmission, for example, the first superconducting layer 201 of each core 102 is used as a superconducting conductor, and the second superconducting layer 203 of each core is used as a superconducting shielding layer. In the case of bipolar DC power transmission, for example, the first superconducting layer 201 of one core 102 is used as a positive terminal line, and the first superconducting layer 201 of another core 102 is used as a negative terminal line, whereas the second superconducting layers 203 of these two cores are used as neutral lines and the remaining core is used as a spare line. In the case of monopole DC power transmission, for example, the first superconducting layer 201 of one core is used as an outward line, the second superconducting layer 203 of the same core is used as a return line, and the remaining cores are used as spare lines.

A termination structure for connecting the cryogenic temperature side and the room temperature side is formed at the end of a superconducting cable line using the above-described superconducting cable (see, e.g., Patent Document 1). As shown in Figs. 8(A) and 8(B), the termination structure is constituted by the end of the superconducting cable 100 and a termination box 300 containing the cable end. The termination box 300 includes termination coolant vessels 301 and 302, in which the ends of the cores 102 are contained, and a termination vacuum thermal-insulation vessel 303 which is arranged so as to surround the outer peripheries of the termination coolant vessels 301 and 302. The end of each core 102 is stripped off stepwise to make the first superconducting layer 201 and the second superconducting layer 203 exposed in sequential order, and the exposed layers 201 and 203 are introduced respectively to the termination coolant vessels 301 and 302. A bushing 310 having a built-in lead portion 311 made of copper is connected to the first superconducting layer 201. A porcelain tube 312 is disposed at the room temperature side of the bushing 310. Electric power can be fed through the bushing 310 from the cryogenic temperature side to the room temperature side or from the room temperature side to the cryogenic temperature side. An epoxy unit 313 is disposed around a portion of the first superconducting layer 201, which portion is located at about the boundary between the termination coolant vessels 301 and 302.

When the AC power transmission is performed using the above-described superconducting cable line, the second superconducting layer 203 needs grounding. For that purpose, as shown in Fig. 8(A), the second superconducting layers 203 of the three cores are connected to each other through a short-circuit member 210, and a grounding conductor 211 is connected to the short-circuit member 210 in order to provide grounding. The grounding conductor 211 is led out through the walls of the coolant vessel 302 and the vacuum thermal-insulation vessel 303 to the exterior having room temperature, and is grounded. On the other hand, when the monopole DC power transmission is performed, the second superconducting layer 203 serves as a return conductor, a current always flowing through it in magnitude comparable to that of a current flowing through the first superconducting layer 201. And, when the bipolar DC power transmission is performed, the second superconducting layer 203 is used as a neutral line through which an unbalanced current flows. Therefore, in the case of the DC power transmission, as shown in Fig. 8(B), a lead portion 222 built in a bushing 221 is connected to the second superconducting layers 203 of the three cores, which are connected to each other by a short-circuit member 220, and the end of the bushing 221 is led out to the exterior having room temperature. Note that although the three cores are present actually, only two cable cores 102 are shown in Figs. 8(A) and 8(B).

Patent Document 1 : Japanese Unexamined Patent Application Publication No. 2002-238144

### Disclosure of the Invention

### Problems to be Solved by the Invention

While power transmission and distribution lines are constituted mainly for AC power at present, the DC power transmission is much more advantageous in consideration of transmission capacity and transmission loss. Therefore, there is a possibility that conversion from an AC line to a DC line is required. In such a case, the cable itself can be easily converted from the use in the AC power transmission to the use in the DC power transmission. However, it is difficult to convert the AC line to the DC line as it is, since the termination structure of the AC line is different from that of the DC line as shown in Figs. 8(A) and 8(B) because the current flowing through the second superconducting layer is different between the AC line and the DC line.

In the AC line, because the current flowing through the grounding conductor connected to the second superconducting layer is small, the cross-sectional area of a grounding conductor can be relatively small with respect to its conductive portion. On the other hand, in the DC line, when the current flowing through the second superconducting layer has substantially the same magnitude as that of the current flowing through the first superconducting layer, the lead portion connected to the second superconducting layer is designed to allow that current to flow through the lead portion and is required to have a large cross-sectional area in its conductor portion. Therefore, even if the grounding conductor used in the AC line is employed as the lead portion in the DC line, it is practically impossible for the required current to flow through the lead portion. Conversely, when the DC line is required to be altered to the AC line, the ground potential can be obtained by employing the lead portion in the DC line, but the drawback is that excessive heat penetration through the lead portion increases because the cross-sectional area of the lead portion in the DC line is large as mentioned above. Also, in termination structures which are provided at the opposite ends of each line, the grounding conductor in the AC line is connected to only one of the opposite sides in some cases, while the lead portion in the DC line is provided always at both of the opposite ends. Therefore, when the AC line is converted to the DC line, a lead portion has to be newly provided at one end of the line in such cases ; whereas, when the DC line is altered to the AC line, the lead portion at one end of the line becomes unnecessary and the increase of excessive heat penetration occurs as described above.

Further, the cross-sectional area of the lead portion built in the bushing is designed so as to provide the desired electric power or to allow the desired current to flow through the lead portion. For that reason, if the required electric power is changed later, the lead portion built in the bushing cannot be easily modified depending on the change of the electric power, and the capacity of the lead portion may be possibly excessive or deficient with respect to the new requirement. Therefore, it is desired to develop a structure in which the magnitude of feedable electric power can be easily changed without causing the excessive increase of heat penetration. Such structure capable of changing the magnitude of feedable electric power is desired with respect to not only the superconducting cable, but also other superconducting apparatuses such as a superconducting fault current limiter, a superconducting transformer, and a superconducting magnetic energy storage device.

A main object of the present invention is to provide an electric power feed structure for a superconducting apparatus, which structure is capable of easily changing the magnitude of feedable electric power, from the cryogenic temperature side to the room temperature side or from the room temperature side to the cryogenic temperature side, without excessively increasing the heat loss. Another object of the present invention is to provide a superconducting cable line which is equipped with the electric power feed structure.

### Means for Solving the Problems

In the present invention, the above objects are achieved by making a feed conductor part to have a detachable/attachable structure, which feed conductor part is arranged between the cryogenic temperature side and the room temperature side. That is, the present invention provides an electric power feed structure for input and output of electric power between the cryogenic-temperature side and the room-temperature side in a superconducting apparatus, wherein the electric power feed structure comprises a coolant vessel containing a superconducting section of the superconducting apparatus ; a vacuum thermal insulation vessel arranged so as to surround the outer periphery of the coolant vessel ; and a feed conductor part having one end arranged in the room temperature side and having the other end connected to the superconducting section and capable of electrical conduction between the cryogenic temperature side and the room temperature side. The feed conductor comprises a cryogenic-temperature side conductor connected to the superconducting section and a room-temperature side conductor arranged in the room temperature side, the cryogenic-temperature side conductor and the room-temperature side conductor being detachably attached to each other. The present invention will be described in more detail below.

The structure of the present invention can be applied to various types of superconducting apparatuses having a superconducting section made of superconducting materials. Examples of the superconducting apparatus include a superconducting cable, a superconducting transformer, a superconducting fault current limiter, a superconducting magnetic energy storage device, etc. In the case of the superconducting cable, the superconducting section comprises, for example, a first superconducting layer and a second superconducting layer arranged coaxially to surround the first superconducting layer. In the case of the superconducting transformer, the superconducting fault current limiter, the superconducting transformer, etc., the superconducting section is, for example, a superconducting coil or a superconducting fault current limiting element, each made of a superconducting material.

The superconducting section is contained in a coolant vessel. The coolant vessel is filled with a coolant for cooling and holding the superconducting section in a superconducting state. The coolant is, e.g., liquid nitrogen, liquid hydrogen, or liquid helium. Around the coolant vessel, the vacuum thermal insulation vessel is provided so as to cover the coolant vessel. An inner space of the vacuum thermal insulation vessel is evacuated to a predetermined degree of vacuum. In addition, a thermal insulation material, such as Superinsulation (trade name of a multi-layer thermal insulation), may be disposed in the vacuum thermal insulation vessel to reflect radiant heat. The coolant vessel and the vacuum thermal insulation vessel are each preferably made of metal, e.g., stainless steel having superior strength.

The electric power feed structure includes the feed conductor capable of establishing electrical conduction between the cryogenic-temperature side conductor and the room-temperature side so that a current flowing through the superconducting section contained in the coolant vessel is outputted to flow into the room temperature side or a current is inputted from the room temperature to flow into the superconducting section. The feed conductor has one end arranged in the room temperature side and the other end connected to the superconducting section. The most important feature of the present invention resides in that the feed conductor is made up of divided parts capable of being detachably attached to each other. More specifically, the feed conductor comprises a plurality of divided parts, i.e., a cryogenic-temperature side conductor electrically connected to the superconducting section and a room-temperature side conductor arranged in the room temperature side. By optionally attaching or detaching the divided parts, an effective conductor cross-sectional area of the feed conductor can be changed. That is, when the cryogenic-temperature side conductor and room-temperature side conductor of the feed conductor part are connected together, the feed conductor part is brought into a conductive state, and consequently the effective conductor cross-sectional area thereof is obtained in predetermined value as per design. When the cryogenic-temperature side conductor and the room-temperature side conductor are disconnected from each other, the feed conductor part is brought into a non-conductive state, and consequently the effective conductor cross-sectional area in the conductive state becomes zero. Accordingly, in the case where a plurality of feed conductor parts having the same cross-sectional area are provided, for example, the effective conductor cross-sectional area in the conductive state can be changed depending on the number of connections between the cryogenic-temperature side conductors and the room-temperature side conductors of the plural feed conductor parts. Thus, according to the structure of the present invention, the number of the connected feed conductors can be changed depending on demanded electric power (current). For example, when the demanded electric power is large, the number of the connected feed conductors is increased. When the demanded electric power is small, the number of the connected feed conductors is reduced. On that occasion, by bringing the cryogenic-temperature side conductor and room-temperature side conductor of the unnecessary feed conductor part into the disconnected state, an increase of heat penetration through the feed conductor part in the disconnected state can be substantially avoided.

Although the effective conductor cross-sectional area of the feed conductor parts in the conductive state may be changed as a whole by providing a plurality of feed conductor parts having the same conductor cross-sectional area and changing the number of connections thereof as described above, the effective conductor cross-sectional area of the feed conductor parts in the conductive state may instead be changed as a whole by providing a plurality of feed conductor parts having different cross-sectional areas and selecting the conductor cross-sectional area given by one or more feed conductor parts to be connected. More specifically, for example, a feed conductor having a large cross-sectional area and a feed conductor having a small cross-sectional area are provided such that the feed conductor having the large cross-sectional area and the feed conductor having the small cross-sectional area can be selectively connected depending on the demanded electric power (current). In this case also, by bringing the cryogenic-temperature side conductor and room-temperature side conductor of the unnecessary feed conductor part into the disconnected state, an increase of heat penetration through the feed conductor part in the disconnected state can be prevented.

Thus, in the structure of the present invention, a loss due to heat penetration can be effectively prevented, because the effective conductor cross-sectional area can be easily changed in response to a demand, while it is possible to avoid the occurrence of heat penetration through the feed conductor part in which the cryogenic-temperature side conductor and the room-temperature side conductor are not connected together.

Preferably, the cross-sectional area and length of the feed conductor part are selected so that the total of a loss generated due to the supply of electric power, such as a Joule loss, and a loss due to heat penetration can be minimized. In particular, when a plurality of feed conductors are provided, the cross-sectional area and length of each feed conductor are preferably set to have a constant ratio (S/d) of the cross-sectional area S to the length d. Thus, it is preferable that when the current flowing through the feed conductor is small, the conductor cross-sectional area and length are set to be relatively small and short, respectively, and that when the current flowing through the feed conductor is large, the conductor cross-sectional area is set to be relatively large from the viewpoint of suppressing a temperature rise, and the conductor length is set to be relatively long with intent to ensure thermal insulation. By increasing the number of feed conductor parts, the effective conductor cross-sectional area of the feed conductor parts can be increased as a whole. Therefore, the size of each feed conductor part can be reduced in the longitudinal direction by using a plurality of feed conductor parts each having a small cross-sectional area in a combined manner such that the effective conductor cross-sectional area of the feed conductor parts increases as a whole. In other words, if the ratio S/d is constant, a plurality of feed conductor parts each having a small cross-sectional area and a short length can be used instead of a feed conductor part having a large cross-sectional area and a long length.

The feed conductor is not limited to one having a uniform cross-sectional area in the longitudinal direction, but it may have a shape having different cross-sectional areas in the longitudinal direction or may be formed by using different materials in the longitudinal direction. The feed conductor can be made of a material having superior electrical conductivity, such as copper, a copper alloy, aluminum, or an aluminum alloy. In the case where the feed conductor part is formed by using materials which are different in the longitudinal direction, at least two kinds of materials selected out of the above-mentioned group of metals may be used.

The structure of the cryogenic-temperature side conductor and the room-temperature side conductor may, for example, be such that the room-temperature side conductor is rod-shaped and the cryogenic-temperature side conductor has a tubular form capable of engaging the rod-shaped room-temperature side conductor. The cryogenic-temperature side conductor and the room-temperature side conductor can be connected to each other by inserting the bar-like room-temperature side conductor into the tubular cryogenic-temperature side conductor. At least either one of the cryogenic-temperature side conductor and the room-temperature side conductor may be provided with a resilient contact piece through which the cryogenic-temperature side conductor and the room-temperature side conductor can be in contact with each other when the room-temperature side conductor is fitted to the cryogenic-temperature side conductor. The resilient contact piece may be disposed on an inner peripheral surface of the tubular cryogenic-temperature side conductor, or on an outer peripheral surface of the bar-like room-temperature side conductor, or on the respective peripheral surfaces of both the conductors. Such a tubular contact member can be constituted by using, e.g., Multicontact (trade name) or the so-called tulip contact which is commercially available as a connector for connecting conductors. The tulip contact is a tubular member formed such that a portion of the tubular member on the side receiving a inserted bar-like member is divided into split pieces by a plurality of longitudinal slits, and the split pieces are radially contracted near an opening end of the tubular member to form bent portions, whereby the tubular member and the bar-like member are connected to each other by resiliency of the bent portions. The room-temperature side conductor is adjusted in size so as to have a desired cross-sectional area. Practically, the room-temperature side conductor may have a shape with a uniform cross-sectional area in the longitudinal direction, or a shape with a cross-sectional area differing in part in the longitudinal direction. Further, the room-temperature side conductor may be made of different kinds of materials in the longitudinal direction. The cryogenic-temperature side conductor and the room-temperature side conductor may be made of the same kind of electrically conductive material, or different kinds of electrically conductive materials.

The cryogenic-temperature side conductor and the room-temperature side conductor may be arranged, for example, as follows. The cryogenic-temperature side conductor has one end positioned in the coolant vessel and the other end positioned in the vacuum thermal insulation vessel. One end of the cryogenic-temperature side conductor is positioned in the coolant vessel and the other end is positioned in the vacuum thermal insulation vessel. Such arrangement can be realized by fixing the cryogenic-temperature side conductor in the coolant vessel such that one end of the cryogenic-temperature side conductor connected to the superconducting section is positioned in the coolant vessel, and the other end of the cryogenic-temperature side conductor is positioned so as to project into the vacuum thermal insulation vessel, and by fixing the room-temperature side conductor in the vacuum thermal insulation vessel such that one end of the room-temperature side conductor is positioned in the vacuum thermal insulation vessel, and the other end of the room-temperature side conductor is positioned so as to project out to the exterior at room temperature. In this case, the place where the cryogenic-temperature side conductor is fixed in the wall of the coolant vessel is preferably provided with not only a sealing structure sufficient to prevent the coolant from leaking from the coolant vessel to the vacuum thermal insulation vessel, but also an insulation structure for ensuring electrical insulation between the cryogenic-temperature side conductor and the coolant vessel. For example, a coating layer made of an electrical insulation material, e.g., FRP or an epoxy resin, is preferably formed over an outer periphery of the cryogenic-temperature side conductor. It is also possible to employ a sealing structure and an insulation structure, which are used in the known electric power feed structure when the bushing is arranged to extend from the coolant vessel to the vacuum thermal insulation vessel. Likewise, in the vacuum thermal insulation vessel, the place to which the room-temperature side conductor is fixed is preferably provided with not only a sealing structure sufficient to prevent the vacuum state of the vacuum thermal insulation vessel from being broken, but also a thermal insulation structure as well as an insulation structure for ensuring electrical insulation between the room-temperature side conductor and the coolant vessel. For example, a coating layer made of a material having superior electrical insulation and thermal insulation, e.g., FRP or an epoxy resin, is preferably formed around the outer periphery of the room-temperature side conductor. In addition, a porcelain tube or the like containing an insulating fluid, e.g., an insulating gas, filled therein may be disposed so as to surround the circumference of the protruding part of the room-temperature side conductor which protrudes out of the vacuum thermal insulation vessel into the room-temperature side.

In a wall of the vacuum thermal insulation vessel, an expandable/shrinkable portion capable of expanding and contracting in accordance with the detachment/attachment of the room-temperature side conductor from/to the cryogenic-temperature side conductor is provided near the place where the room-temperature side conductor is fixed, so that the one end of the room-temperature side conductor arranged in the vacuum thermal insulation vessel can be moved away from or toward the opposing proximal end of the cryogenic-temperature side conductor arranged in the vacuum thermal insulation vessel in the state where the cryogenic-temperature side conductor is fixed to the coolant vessel and the room-temperature side conductor is fixed to the vacuum thermal insulation vessel. The expandable/shrinkable portion can be constituted by using, e.g., a bellows tube having superior flexibility.

With the construction described above, by connecting the one end of the room-temperature side conductor to the opposing end of the cryogenic-temperature side conductor, the feed conductor part is brought into the conductive state, thereby enabling electric power to be fed between the cryogenic temperature part and the room temperature part. Also, by disconnecting the one end of the room-temperature side conductor from the opposing end of the cryogenic-temperature side conductor, the feed conductor part is brought into the non-conductive state between the cryogenic temperature part and the room temperature part, thereby preventing heat penetration from the room temperature side to the cryogenic temperature side through the feed conductor part. In particular, with the construction described above, since the room-temperature side conductor is attached to and detached from the cryogenic-temperature side conductor under the conditions in which the vacuum thermal insulation vessel is maintained in the vacuum state at cryogenic temperature, the vacuum thermal insulation vessel is able to continuously hold a high thermal insulation property. Furthermore, since the vacuum thermal insulation vessel having been evacuated into the vacuum state is avoided from returning to room temperature, or the vacuum state is prevented from being broken, which might be caused due to attachment and detachment operations at the feed conductor part, it is unnecessary to lower the temperature in the vacuum thermal insulation vessel or to separately evacuate at the time of attachment and detachment operations.

Another arrangement of the cryogenic-temperature side conductor and the room-temperature side conductor is, by way of example, as follows. One end of the cryogenic-temperature side conductor is positioned in the coolant vessel and the other end is positioned outside the coolant vessel, whereas the room-temperature side conductor is arranged so as to be inserted through an insertion hole formed in the wall of the vacuum thermal insulation vessel. The room-temperature side conductor is inserted through an insertion hole formed in the vacuum thermal insulation vessel. In this arrangement, instead of holding the room-temperature side conductor always fixed to the vacuum thermal insulation vessel and connecting or disconnecting the room-temperature side conductor to or from the cryogenic-temperature side conductor as described above, the room-temperature side conductor is fixed to the vacuum thermal insulation vessel or a later-described auxiliary vacuum vessel only when occasion requires. To that end, an insertion hole allowing the room-temperature side conductor to be inserted through the hole is formed in the vacuum thermal insulation vessel, and when occasion requires, the room-temperature side conductor is inserted through the insertion hole for connection to the cryogenic-temperature side conductor. In this case, the cryogenic-temperature side conductor is fixed to the coolant vessel such that one end of the cryogenic-temperature side conductor connected to the superconducting section is positioned in the coolant vessel, and the other end of the cryogenic-temperature side conductor is positioned outside the coolant vessel, specifically the other end is arranged so as to project into the vacuum thermal insulation vessel or the auxiliary thermal insulation vessel separately provided. In the case of the vacuum thermal insulation vessel arranged outside the coolant vessel, the room-temperature side conductor is inserted through the insertion hole and connected to the cryogenic-temperature side conductor, and after the connection, the room-temperature side conductor is fixed to the vacuum thermal insulation vessel. Also, when the room-temperature side conductor is not connected to the cryogenic-temperature side conductor (i.e., when the feed conductor is not necessary), the insertion hole is closed by a cover or the like to hold the vacuum state of the vacuum thermal insulation vessel. The cover is preferably made of, e.g., FRP or an epoxy resin having a low thermal conductivity. In this arrangement, when the cryogenic-temperature side conductor is connected to or disconnected from the room-temperature side conductor, the vacuum thermal insulation vessel is returned to the state under room temperature and normal pressure (atmospheric pressure) by opening the cover, and after the connection (or detachment), it is evacuated again to the vacuum state.

In the case where the auxiliary thermal insulation vessel is to be arranged outside the coolant vessel, the auxiliary thermal insulation vessel is provided separately from the vacuum thermal insulation vessel. More specifically, the auxiliary thermal insulation vessel is provided in a manner such that the inner space of the above-mentioned insertion hole extending from a surface of the vacuum thermal insulation vessel to the coolant vessel can be maintained in a vacuum state. Namely, in this arrangement, the auxiliary thermal insulation vessel is provided as a vacuum space independent of the vacuum thermal insulation vessel. The insertion hole can be formed, for example, in the following steps: preparing a tubular member; boring holes in the vacuum thermal insulation vessel and the coolant vessel so as to match with openings at the opposite ends of the tubular member; and coupling the openings of the tubular member to the respective holes of the coolant vessel and the vacuum thermal insulation vessel. In order to enhance thermal insulation, preferably, the tubular member is formed with a relatively thin wall thickness by using a material having superior strength, e.g., metal, and its outer periphery is covered with a coating layer made of a material having superior thermal insulation, e.g., an epoxy resin, and the tubular member thus formed is disposed with the coating layer side being arranged on the wall side of the vacuum thermal insulation vessel. The auxiliary thermal insulation vessel includes at least an inner space of the insertion hole. The length of the auxiliary thermal insulation vessel may be changed depending on the length of the room-temperature side conductor, for example, and the auxiliary thermal insulation vessel may be arranged to partly project into the vacuum thermal insulation vessel. Moreover, the auxiliary thermal insulation vessel is provided so as to form a vacuum layer around most of the outer periphery of the room-temperature side conductor except for its portion that is positioned in the exterior at room temperature. A second insertion hole allowing the room-temperature side conductor to be inserted through the hole is formed in the auxiliary thermal insulation vessel, and when occasion requires, the room-temperature side conductor is inserted through the insertion hole and the second insertion hole and is connected to the cryogenic-temperature side conductor. After the connection, the room-temperature side conductor is fixed to the auxiliary thermal insulation vessel. Also, when the room-temperature side conductor is not connected to the cryogenic-temperature side conductor (i.e., when the feed conductor is not necessary), the second insertion hole is closed by a cover made of FRP or an epoxy resin, for example, to hold the vacuum state of the auxiliary thermal insulation vessel. In this arrangement, when the cryogenic-temperature side conductor is connected to or disconnected from the room-temperature side conductor, only the auxiliary thermal insulation vessel is returned to the state under room temperature and normal pressure (atmospheric pressure) by opening the cover, and after the connection (or detachment), it is just evacuated again to the vacuum state. Thus, the feed conductor can be attached and detached while the vacuum thermal insulation vessel is kept in the vacuum state.

Also in the above-described construction including the insertion hole formed in the wall of the vacuum thermal insulation vessel, preferably, the coolant vessel is structured such that the portion to which the cryogenic-temperature side conductor is fixed has not only a sealing structure sufficient to prevent the coolant from leaking from the coolant vessel to the vacuum thermal insulation vessel and the auxiliary thermal insulation vessel, but also an insulation structure for ensuring electrical insulation between the cryogenic-temperature side conductor and the coolant vessel. For example, a coating layer made of an electrical insulation material, e.g., FRP or an epoxy resin, is preferably formed at a place surrounding the outer periphery of the cryogenic-temperature side conductor. It is also possible to employ a sealing structure and an insulation structure, which are used in the known electric power feed structure when the bushing is arranged to extend from the coolant vessel to the vacuum thermal insulation vessel. Preferably, the vacuum thermal insulation vessel and the auxiliary thermal insulation vessel are structured such that the portions to which the room-temperature side conductor is fixed have not only a sealing structure that is capable of preventing the vacuum state of the vacuum thermal insulation vessel and the auxiliary thermal insulation vessel from being broken after the vessels have been evacuated, but also a thermal insulation structure as well as an insulation structure that is capable of ensuring electrical insulation between the room-temperature side conductor and the coolant vessel or between the room-temperature side conductor and the auxiliary thermal insulation vessel. For example, a coating layer made of a material having superior electrical insulation and thermal insulation, e.g., FRP or an epoxy resin, is preferably formed over the outer periphery of the room-temperature side conductor. In addition, a porcelain tube or the like containing an insulating fluid, e.g., an insulating gas, filled therein may be disposed so as to surround the circumference of the protruding part of the room-temperature side conductor which protrudes into the room-temperature side from the vacuum thermal insulation vessel or the auxiliary thermal insulation vessel.

In the construction including the insertion hole, as in the above-described construction in which the room-temperature side conductor is always fixed to the vacuum thermal insulation vessel, the feed of electric power between the cryogenic temperature component and the room temperature component can be performed by inserting one end of the room-temperature side conductor through the insertion hole and connecting to the cryogenic-temperature side conductor so as to make the feed conductor part conductive. Also, by withdrawing the room-temperature side conductor through the insertion hole so as to disconnect from the cryogenic-temperature side conductor, the feed conductor part is brought into a non-conductive state between the cryogenic temperature part and the room temperature part, thereby preventing heat penetration from the room temperature side to the cryogenic temperature side through the feed conductor part.

A feed conductor part such as described above can be adopted, for example, in a termination structure formed at a terminal end of a cable line in the case where the cable line is constructed by using a superconducting cable, which is one example of the superconducting apparatuses. Particularly, when the superconducting cable has a superconducting section formed of two layers comprising a first superconducting layer and a second superconducting layer arranged coaxially with respect to the first superconducting layer, with an electrical insulation layer being disposed between the first and second superconducting layers, it is preferable that the above mentioned feed conductor part be provided at least at one of the first superconducting layer and the second superconducting layer. Namely, the feed conductor may be provided only for the first superconducting layer, or only for the second superconducting layer, or for both the first superconducting layer and the second superconducting layer.

For example, when the feed conductor part is provided at the second superconducting layer, it is possible to easily perform a conversion from an AC power transmission line to a DC power transmission line or from the DC power transmission line to the AC power transmission line by changing the effective conductor cross-sectional area to an appropriate size through an attachment or detachment operation at the feed conductor part. On that occasion, by disconnecting the cryogenic-temperature side conductor and the room-temperature side conductor from each other in the unnecessary feed conductor part, the heat penetration through the disconnected feed conductor part can be prevented. Also, in the case where the feed conductor part is provided for both the first and second superconducting layers, it is possible to not only perform the above-described alteration of the power transmission type, but also to feed electric power in an amount neither too much nor too less as demanded when the demand of electric power is changed, by changing the effective conductor cross-sectional area to an appropriate size through an attachment or detachment operation of the feed conductor part. Also, on that occasion, as in the above-described case, the heat penetration through the disconnected feed conductor part can be prevented by disconnecting the unnecessary feed conductor part.

Further, when a cable line is constructed using a superconducting cable, which is an example of the superconducting apparatuses, the feed conductor part may be provided at an arbitrary middle position of the cable line. By changing the effective conductor cross-sectional area to an appropriate size through the attachment or detachment operation of the feed conductor part provided at a middle position of the line, it is possible to change the feedable electric power according to the magnitude of a load, or to make adaptation so as to comply with a change of the transmission and distribution route. On that occasion, as in the above-described cases, the unnecessary feed conductor part is disconnected to prevent an increase of the heat penetration. From the view point of ensuring insulation, it is preferable that the structure in which the feed conductor part is provided at a middle position of the line be applied to a low-voltage power transmission line (distribution line), which is relatively easy to form an insulation structure.

A more specific example of the structure of the present invention which is applied to a superconducting apparatus is the structure of a superconducting cable that is constituted by disposing one or more cable cores in a thermally insulated pipe. The thermally insulated pipe has a double-wall structure comprising an inner pipe and an outer pipe, for example, with the space between the inner and outer pipes being evacuated to a vacuum state. A thermal insulation layer may be formed around the outer periphery of the inner pipe by winding a thermal insulation material, e.g., Superinsulation (trade name of a multi-layer thermal insulation). Preferably, the thermally insulated pipe is constituted by a corrugated pipe having superior flexibility and made of metal, e.g., stainless steel having superior strength. Each cable core comprises a former, a first superconducting layer, an electrical insulation layer, a second superconducting layer, and a protection layer, which are arranged in this order from the center. A semi-conducting layer may be provided on the inner peripheral side of the electrical insulation layer (or the outer peripheral side of the first superconducting layer) or on the outer peripheral side of the electrical insulation layer (or the inner peripheral side of the second superconducting layer). The present invention may utilize a single-core cable having one cable core disposed in a thermally insulated pipe, or a multi-core cable having a plurality of cable cores disposed in a thermally insulated pipe. Within the inner pipe in which the cable cores are contained, a space defined by outer peripheries of the cores and an inner periphery of the inner pipe serves as a channel for a coolant for cooling the superconducting section (i.e., the first superconducting layer and the second superconducting layer). One example of the coolant is liquid nitrogen.

### Advantages of the Invention

In the structure of the present invention, an effective conductor cross-sectional area can be changed with ease as described above since the feed conductor part is divided into two portions: the cryogenic temperature side and the room temperature side, so that both of the portions can be detachably attached to each other. That is, by connecting the cryogenic-temperature side portion and the room-temperature side portion together in the feed conductor part, the desired effective conductor cross-sectional area is obtained, thereby enabling power transmission; by disconnecting these portions from each other, heat penetration through the feed conductor part is prevented. When the structure of the present invention is employed in a superconducting cable line, it is possible to easily perform, for example, a change from an AC line to a DC line or from the DC line to the AC line. Further, if the structure of the present invention is employed in a superconducting cable line, electric power can be fed in response to a demand without causing an excessive increase of the heat penetration by changing the effective conductor cross-sectional area by means of the attachment or detachment operation of the feed conductor part. Moreover, by providing the structure of the present invention at an arbitrary position of a superconducting cable line, it is made possible to easily adapt for a change in the electric power feed position, e.g., a route change.

In addition, the structure of the present invention can be applied to not only the superconducting cable, but also to other superconducting apparatuses for transferring the electric power between the cryogenic temperature side and the room temperature side, such as a superconducting fault current limiter, a superconducting transformer, and a superconducting magnetic energy storage device.

### Brief Description of the Drawings

[Fig. 1] Figure 1 is a schematic view of an electric power feed structure according to the present invention, the view showing an example in which a room-temperature side conductor is fixed to a vacuum thermal insulation vessel.
Figure 2(A) is a schematic view of a feed conductor part employed in the electric power feed structure according to the present invention, the view showing an example in which the room-temperature side conductor has a large and long cross-sectional area that is uniform in the longitudinal direction.
Figure 2(B) is a schematic view of a feed conductor part employed in the electric power feed structure according to the present invention, the view showing an example in which the room-temperature side conductor has a small and short cross-sectional area that is uniform in the longitudinal direction.
Figure 2(C) is a schematic view of a feed conductor part employed in the electric power feed structure according to the present invention, the view showing an example in which the room-temperature side conductor has a cross-sectional area varying in the longitudinal direction.
[Fig. 3] Figure 3 is a schematic view of an electric power feed structure according to the present invention, the view showing an example in which a room-temperature side conductor is not always fixed to a vacuum thermal insulation vessel.
[Fig. 4(A)] Figure 4(A) is a schematic view of an electric power feed structure according to the present invention, the view showing an example in which a room-temperature side conductor is not always fixed to the vacuum thermal insulation vessel and the room-temperature side conductor is short.
[Fig. 4(B)] Figure 4(B) is a schematic view of an electric power feed structure according to the present invention, the view showing an example in which a room-temperature side conductor is not always fixed to the vacuum thermal insulation vessel and the room-temperature side conductor is long.
[Fig. 5(A)] Figure 5(A) is a schematic view of a termination portion of a superconducting cable line provided with the electric power feed structure according to the present invention, the view showing an example of an AC power transmission line.
[Fig. 5(B)] Figure 5(B) is a schematic view of a termination portion of a superconducting cable line provided with the electric power feed structure according to the present invention, the view showing an example of a DC power transmission line.
[Fig. 6] Figure 6 is a schematic view of a superconducting transformer provided with the electric power feed structure according to the present invention.
[Fig. 7] Figure 7 is a schematic cross-sectional view of a superconducting cable of the three-core in one cryostat type.
[Fig. 8(A)] Figure 8(A) is a schematic view of a termination structure of the known superconducting cable line, the view showing an example of the termination structure provided in an AC power transmission line.
[Fig. 8(B)] Figure 8(B) is a schematic view of a termination structure of the known superconducting cable line, the view showing an example of the termination structure provided in a DC power transmission line.

### Reference Numerals

- 10: superconducting section
- 20: coolant vessel
- 21: cryogenic-temperature side sealing portion
- 30: vacuum thermal insulation vessel
- 31: room-temperature side sealing portion
- 32: expandable/shrinkable portion
- 35A, 35B: insertion hole
- 35C: second insertion hole
- 36: cover
- 37: auxiliary thermal insulation vessel
- 38: coating layer
- 40, 40A, 40B, 40C: feed conductor
- 41: cryogenic-temperature side conductor
- 42: room-temperature side conductor
- 43: lead
- 44: grounding conductor
- 50: termination box
- 51, 52: termination coolant vessel
- 53: termination vacuum thermal-insulation vessel
- 60: bushing
- 61: lead portion
- 62: porcelain tube
- 64: epoxy unit
- 70: short-circuit portion
- 100: superconducting cable
- 101: thermal insulated pipe
- 101a: outer pipe
- 101b: inner pipe
- 102: cable core
- 103: space
- 104: ant-corrosion layer
- 200: former
- 201: first superconducting layer
- 202: electrical insulation layer
- 203: second superconducting layer
- 204: protection layer
- 210,220: short-circuit portion
- 221: grounding conductor
- 221: bushing
- 222: lead portion
- 300: termination box
- 301, 302: termination coolant vessel
- 303: termination vacuum thermal-insulation vessel
- 310: bushing
- 311: lead portion
- 312: porcelain tube
- 313: epoxy unit

### Best Mode for Carrying Out the Invention

Examples of the present invention will be described below. In the drawings, the same reference numerals denote the same components. The proportions of dimensions shown in the drawings are not always matched with those stated in the following description.

### (EXAMPLE 1)

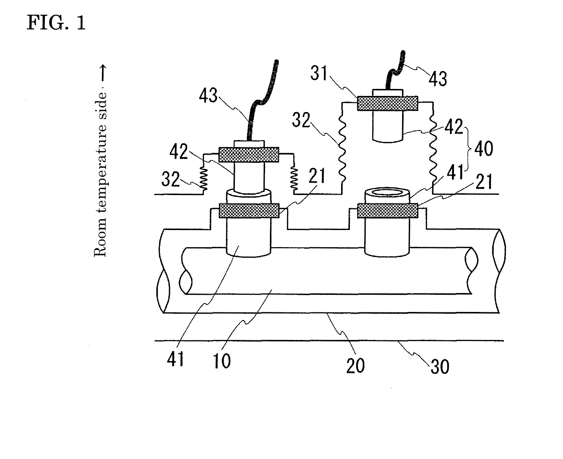

Figure 1 is a schematic view of an electric power feed structure according to the present invention. The electric power feed structure according to the present invention comprises a coolant vessel 20 containing a superconducting section 10 which is provided in a superconducting apparatus, a vacuum thermal insulation vessel 30 arranged so as to surround an outer periphery of the coolant vessel 20, and a feed conductor 40 having one end arranged in the room temperature side and the other end connected to the superconducting section 10, the feed conductor 40 being able to establish electrical conduction between the cryogenic temperature side and the room temperature side. The most important feature of the electric power feed structure according to the present invention resides in that the feed conductor part 40 is divided into two parts which can be detachably attached to each other: one in the room temperature side and the other in the cryogenic temperature side. More specifically, the feed conductor part 40 comprises a cryogenic-temperature side conductor 41, which is arranged in the cryogenic temperature side and connected to the superconducting section 10, and a room-temperature side conductor 42, which is arranged in the room temperature side and capable of being detachably attached to the cryogenic-temperature side conductor 41.

The superconducting section 10 provided in the superconducting apparatus is made of a superconducting material, e.g., an oxide-based superconducting material, and is contained in the coolant vessel 20. The superconducting section 10 is, for example, a superconducting conductor or a superconducting shielding layer of a superconducting cable; a superconducting coil of a superconducting transformer and a superconducting magnetic energy storage device; or a superconducting fault current limiting element of a superconducting fault current limiter. A coolant is caused to flow through the coolant vessel 20 so that the superconducting section 10 is cooled to maintain the superconducting state thereof. The vacuum thermal insulation vessel 30 is arranged around the coolant vessel 20 to suppress heat penetration from the exterior, i.e., the room temperature side. In this Example, the coolant vessel 20 and the vacuum thermal insulation vessel 30 are each constituted by a vessel made of stainless steel having high strength. Also, a thermal insulation material, e.g., Superinsulation (trade name of a multi-layer thermal insulation), is disposed inside the vacuum thermal insulation vessel 30, and the interior of the vacuum thermal insulation vessel 30 is evacuated to a predetermined degree of vacuum.

In the superconducting section 10 described above, the electric power feed structure employing the feed conductor 40 is formed at a position where electric power is inputted and outputted between the cryogenic temperature side and the room temperature side. The feed conductor part 40 used in this Example was structured such that the room-temperature side conductor 42 fixed to the vacuum thermal insulation vessel 30 was capable of being attached to and detached from the cryogenic-temperature side conductor 41 fixed to the coolant vessel 20 while the vacuum state of the vacuum thermal insulation vessel 30 was held. Thus, with such a construction, the vacuum thermal insulation vessel 30 is not required to be returned to the state under room temperature and normal pressure (atmospheric pressure) when the feed conductor 40 is connected and disconnected.

In this Example, the room-temperature side conductor 42 is formed of a rod-shaped member having a predetermined cross-sectional area, and the cryogenic-temperature side conductor 41 is formed of a tubular member which is capable of engaging the rod-shaped room-temperature side conductor 42. A plurality of resilient contact pieces (not shown) are provided on an inner peripheral surface of the tubular member such that the cryogenic-temperature side conductor 41 and the room-temperature side conductor 42 firmly contact with each other by means of the resilient contact pieces when the room-temperature side conductor 42 is engaged with the cryogenic-temperature side conductor 41. Upon mutual contact of the resilient contact pieces and an outer peripheral surface of the room-temperature side conductor 42, the cryogenic-temperature side conductor 41 and the room-temperature side conductor 42 are brought into a conductive state. The cryogenic-temperature side conductor 41 and the room-temperature side conductor 42 are each made of an electrically conductive material, e.g., copper. With that construction, when the room-temperature side conductor 42 is inserted into the cryogenic-temperature side conductor 41, both the conductors 41, 42 are electrically connected to each other such that electric power can be transferred between the cryogenic temperature side and the room temperature side. When the room-temperature side conductor 42 is withdrawn out of the cryogenic-temperature side conductor 41, both the conductors 41 and 42 are brought into a non-conductive state.

The cryogenic-temperature side conductor 41 is fixed to the coolant vessel 20. More specifically, one end of the cryogenic-temperature side conductor 41 is electrically connected to the superconducting section 10, and the connected end side portion of the cryogenic-temperature side conductor 41 is positioned inside the coolant vessel 20. The other end of the conductor 41 is arranged to project into the vacuum thermal insulation vessel 30. At a position where the cryogenic-temperature side conductor 41 is fixed to the coolant vessel 20, a cryogenic-temperature side sealing portion 21 made of an electrical insulation material, e.g., fiberglass-reinforced plastic (FRP), is provided around the conductor 41 so as to prevent the coolant from flowing out from the coolant vessel 20 into the vacuum thermal insulation vessel 30 and to avoid electrical connection between the coolant vessel 20 and the cryogenic-temperature side conductor 41.

The room-temperature side conductor 42 is fixed to the vacuum thermal insulation vessel 30. More specifically, one end of the cryogenic-temperature side conductor 42 is positioned inside the vacuum thermal insulation vessel 30, and the other end of the conductor 42 is arranged so as to project into the exterior having room temperature. At a position where the room-temperature side conductor 42 is fixed to the vacuum thermal insulation vessel 30, a room-temperature side sealing portion 31 made of a material having superior electrical insulation and thermal insulation, e.g., FRP, is provided around the conductor 42 so as to prevent the vacuum state of the vacuum thermal insulation vessel 30 from being broken, to avoid electrical connection between the vacuum thermal insulation vessel 30 and the room-temperature side conductor 42, and to avoid an increase of heat penetration from the exterior. Further, a lead 43 connected to an external apparatus, etc. is attached to the other end of the room-temperature side conductor 42, which is positioned in the room temperature side. In addition, a porcelain tube containing an insulating fluid, e.g., an insulating gas, filled therein may be disposed about the room temperature side end portion of the room-temperature side conductor 42. That construction including the lead and the porcelain tube is similarly applied to Examples 2 and 3 described later.

An expandable/shrinkable portion 32 is provided in the wall of the vacuum thermal insulation vessel 30 near a position where the room-temperature side conductor 42 is fixed, in order to prevent the vacuum thermal insulation vessel 30 from being broken due to the movement of the room-temperature side conductor 42 when the room-temperature side conductor 42 is moved toward or away from the cryogenic-temperature side conductor 41. In this Example, a corrugated pipe made of stainless steel having superior strength and flexibility is employed to constitute the expandable/shrinkable portion 32.

In the electric power feed structure of the present invention which has the above-described construction, when the room-temperature side conductor 42 is connected to the cryogenic-temperature side conductor 41, the feed conductor 40 is brought into the conductive state, and when the room-temperature side conductor 42 is disconnected from the cryogenic-temperature side conductor 41, the feed conductor 40 is brought into the non-conductive state. By changing the number of connections between the cryogenic-temperature side conductors 41 and the room-temperature side conductors 42, therefore, an effective conductor cross-sectional area of the feed conductors 40 can be easily changed. That is, in the electric power feed structure of the present invention, the cryogenic-temperature side conductors 41 and the room-temperature side conductors 42 can be selectively connected to provide the effective conductor cross-sectional area depending on the demanded electric power (current), and the unnecessary feed conductor part can be held in a state where the cryogenic-temperature side conductor 41 and the room-temperature side conductor 42 are disconnected from each other. In spite of the existence of a plurality of feed conductor parts 40, the heat penetration through the unnecessary feed conductor part can be prevented. Thus, the electric power feed structure of the present invention makes it possible to easily change the conductor cross-sectional area in accordance with a demand and to prevent the excessive heat penetration.

The following description regarding the feed conductor is similarly applied to Examples 2 and 3. While this Example 1 has been described above in connection with the case including two feed conductors, the number of the feed conductors may be one or three or more. Also, in the structure of Example 1, two feed conductor parts having the same cross-sectional area uniform in the longitudinal direction were used; when a plurality of feed conductor parts having the same cross-sectional area are employed as in this case, the effective conductor cross-sectional area of the feed conductor part(s) in the conductive state can be varied by changing the number of connections established by the feed conductor part.

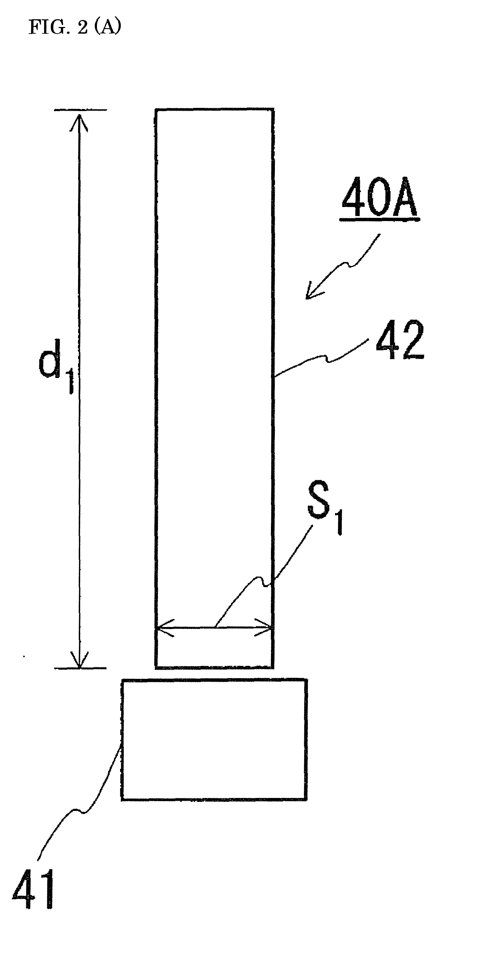

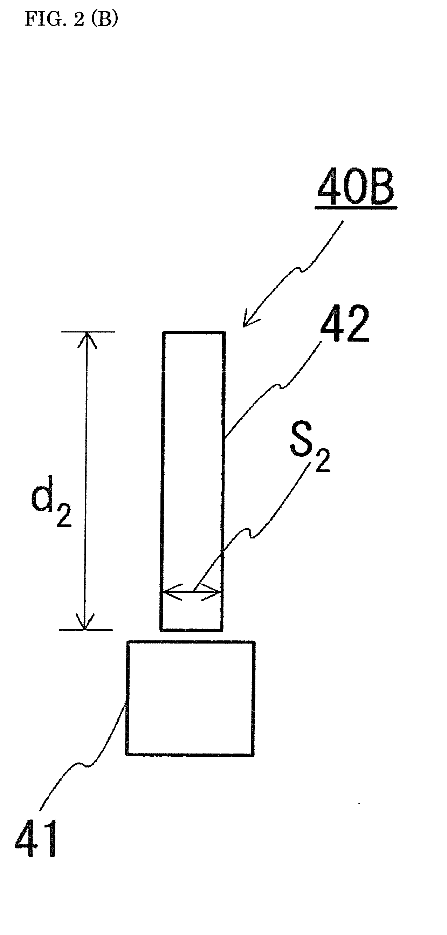

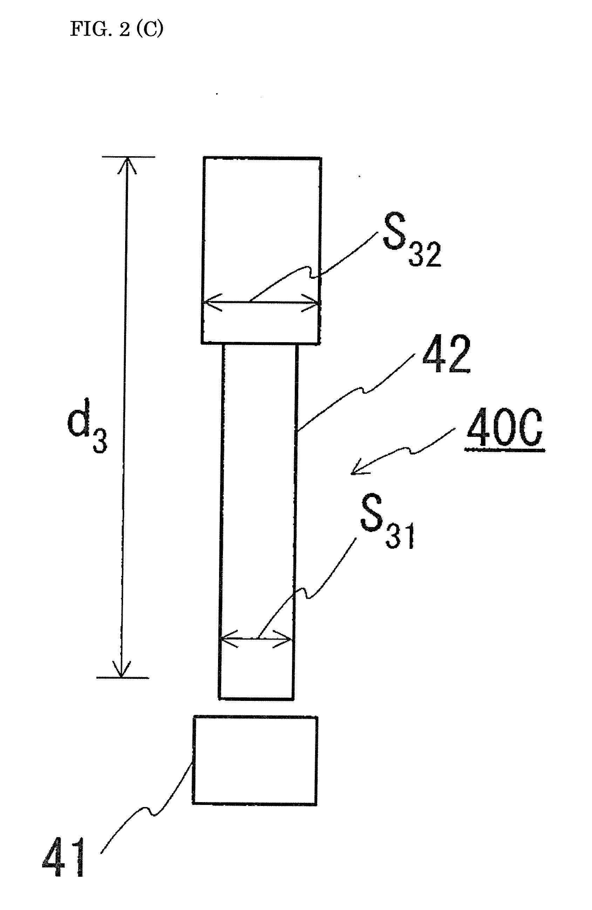

Further, a plurality of feed conductor parts having different cross-sectional areas may be provided in combination. For example, one feed conductor part 40A may have a larger cross-sectional area S₁ and a longer length d₁ as shown in Fig. 2(A), and the other feed conductor part 40B may be formed to have a smaller cross-sectional area S₂ and a shorter length d₂ as shown in Fig. 2(B). In this case, the effective conductor cross-sectional area of the feed conductor part in the conductive state can be varied by selecting the feed conductor part to be connected. For example, when large electric power (current) is demanded, the cryogenic-temperature side conductor 41 and the room-temperature side conductor 42 in the feed conductor part 40A are connected to each other, while the cryogenic-temperature side conductor 41 and the room-temperature side conductor 42 in the feed conductor part 40B are disconnected from each other. Conversely, when small electric power (current) is demanded, the cryogenic-temperature side conductor 41 and the room-temperature side conductor 42 in the feed conductor part 40A are disconnected from each other, while the cryogenic-temperature side conductor 41 and the room-temperature side conductor 42 in the feed conductor part 40B are connected to each other.

A plurality of feed conductor parts having the same cross-sectional area may be made of materials having different conductivities, and the feed conductor part to be connected may be selected so as to comply with the demanded electric power (current). For example, when large electric power is demanded, the cryogenic-temperature side conductor and the room-temperature side conductor in the feed conductor part made of a material having a higher conductivity are connected to each other, while the cryogenic-temperature side conductor and the room-temperature side conductor in the feed conductor part made of a material having a lower conductivity are disconnected from each other. Conversely, when small electric power is demanded, the cryogenic-temperature side conductor and the room-temperature side conductor in the feed conductor part made of a material having a higher conductivity are disconnected from each other, while the cryogenic-temperature side conductor and the room-temperature side conductor in the feed conductor part made of a material having a lower conductivity are connected to each other. It is also possible to provide a plurality of feed conductor parts each having a constant cross-sectional area in the longitudinal direction and made of materials having different conductivities in the longitudinal direction, and to select the feed conductor part to be connected, thereby changing the electric power inputted or outputted.

The cross-sectional area of the room-temperature side conductor 42 may be different in the longitudinal direction as in the case of a feed conductor part 40C shown in Fig. 2(c). The room-temperature side conductor 42 of the feed conductor part 40C has a length d₃ and comprises a portion having a smaller cross-sectional area S₃₁ and a portion having a larger cross-sectional area S₃₂. When the feed conductor parts 40A, 40B and 40C are employed in combination, the respective types of feed conductor parts are formed to have a constant ratio (S/d) between a cross-sectional area S and a length d.

### (EXAMPLE 2)

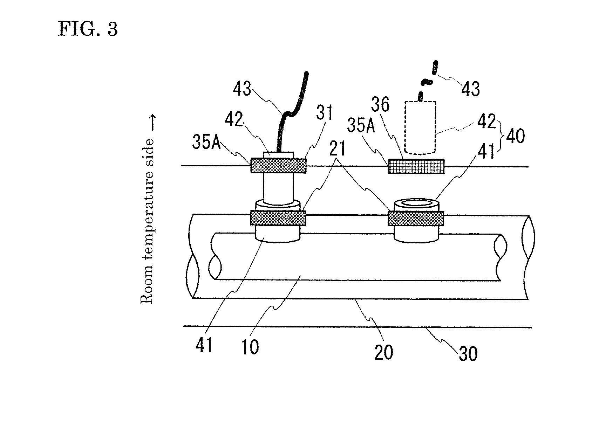

In contrast with the structure of above-described Example 1, in which the room-temperature side conductor is always fixed to the vacuum thermal insulation vessel, in the structure of this Example 2 and later-described Example 3 the room-temperature side conductor is not always fixed to the vacuum thermal insulation vessel. Figure 3 is a schematic view of an electric power feed structure according to the present invention, the view showing an example in which a vacuum thermal insulation vessel has an insertion hole through which a room-temperature side conductor can be inserted. The electric power feed structure shown in this Example 2 according to the present invention comprises a coolant vessel 20 containing a superconducting section 10 which is provided in a superconducting apparatus, a vacuum thermal insulation vessel 30 arranged so as to surround the outer periphery of the coolant vessel 20, and a feed conductor part 40, which is arranged such that one end is disposed in the room temperature side and the other end is connected to the superconducting section 10, and which is capable of establishing electrical conduction between the cryogenic temperature side and the room temperature side. The feed conductor part 40 comprises a cryogenic-temperature side conductor 41 arranged in the cryogenic temperature side and connected to the superconducting section 10, and a room-temperature side conductor 42 arranged in the room temperature side and capable of being detachably attached to the cryogenic-temperature side conductor 41. The cryogenic-temperature side conductor 41 is fixed to the coolant vessel 20 in a manner such that one end thereof is positioned inside the coolant vessel 20 and the other end is arranged to project into the vacuum thermal insulation vessel 30 that is arranged surrounding the outer periphery of the coolant vessel 20. At a position where the cryogenic-temperature side conductor 41 is fixed to the coolant vessel 20, a cryogenic-temperature side sealing portion 21 is provided. With respect to the above-described construction, Example 2 is similar to Example 1, but it differs from Example 1 in that the room-temperature side conductor 42 of the feed conductor part 40 used in this Example 2 is not always fixed in the vacuum thermal insulation vessel 30. The following description is made primarily of that different point.

The feed conductor part 40 used in this Example 2 had a construction similar to that used in Example 1. More specifically, the room-temperature side conductor 42 was formed of a rod-shaped member having a predetermined cross-sectional area, and the cryogenic-temperature side conductor 41 was formed of a tubular member that had a plurality of resilient contact pieces (not shown) provided on the inner peripheral surface thereof and that was capable of engaging the rod-shaped room-temperature side conductor 42. Thus, as in Example 1, when the room-temperature side conductor 42 is inserted into the cryogenic-temperature side conductor 41, the conductors are connected to each other through the resilient contact pieces, whereby the feed conductor part 40 is brought into a conductive state. When the room-temperature side conductor 42 is withdrawn out of the cryogenic-temperature side conductor 41, the feed conductor 40 is brought into a non-conductive state.

Further, the vacuum thermal insulation vessel 30 in this Example 2 has an insertion hole 35A which penetrates through a wall of the vessel 30 and through which the room-temperature side conductor 42 can be inserted. For connecting the room-temperature side conductor 42 to the cryogenic-temperature side conductor 41, the room-temperature side conductor 42 is inserted through the insertion hole 35A, and after the connection is accomplished between the conductors, the room-temperature side conductor 42 is fixed in place. At a fixed position of the room-temperature side conductor 42, as in Example 1, a room-temperature side sealing portion 31 is provided for the purpose of maintaining the vacuum state of the vacuum thermal insulation vessel 30. On the other hand, when the room-temperature side conductor 42 is detached from the cryogenic-temperature side conductor 41 to bring the feed conductor 40 into the disconnected state, the room-temperature side conductor 42 is not kept fixed to the vacuum thermal insulation vessel 30, but it is placed outside the vessel 30. At that time, the insertion hole 35A is closed by a cover 36 to maintain the vacuum state of the vacuum thermal insulation vessel 30. In this Example 2, the cover 36 is made of FRP.

In the electric power feed structure of the present invention which has the above-described construction, when the room-temperature side conductor 42 is inserted through the insertion hole 35A and is connected to the cryogenic-temperature side conductor 41, the feed conductor 40 is brought into the conductive state, and when the room-temperature side conductor 42 is disconnected from the cryogenic-temperature side conductor 41, the feed conductor 40 is brought into the non-conductive state. By changing the number of connections between the cryogenic-temperature side conductors 41 and the room-temperature side conductors 42, therefore, an effective conductor cross-sectional area of the feed conductors 40 can be easily changed as in Example 1. Accordingly, by connecting one or more cryogenic-temperature side conductors 41 and one or more room-temperature side conductors 42 so as to provide the effective conductor cross-sectional area depending on the demanded electric power and by keeping the cryogenic-temperature side conductor 41 and the room-temperature side conductor 42 in the unnecessary feed conductor part to be in the disconnected state, heat penetration through the unnecessary feed conductor part can be prevented in spite of the existence of the plurality of feed conductor parts 40. Thus, the electric power feed structure of the present invention makes it possible to easily change the conductor cross-sectional area in accordance with a demand and to prevent the excessive heat penetration.

In this Example 2, two feed conductor parts are provided as described above ; however, the number of the feed conductor parts may be one or three or more. For connecting the room-temperature side conductor to the cryogenic-temperature side conductor, the connecting operation is performed after opening the cover of the insertion hole and returning the interior of the vacuum thermal insulation vessel to the state of room temperature and normal pressure (atmospheric pressure). Preferably, the interior of the vacuum thermal insulation vessel is evacuated to a predetermined degree of vacuum after the connection is done and the room-temperature side conductor 42 is fixed to the vacuum thermal insulation vessel. Likewise, for disconnecting the room-temperature side conductor and the cryogenic-temperature side conductor from each other, it is preferable that the interior of the vacuum thermal insulation vessel be first returned to the state of the room temperature and the normal pressure and then be evacuated to the vacuum stat.

### EXAMPLE 3)

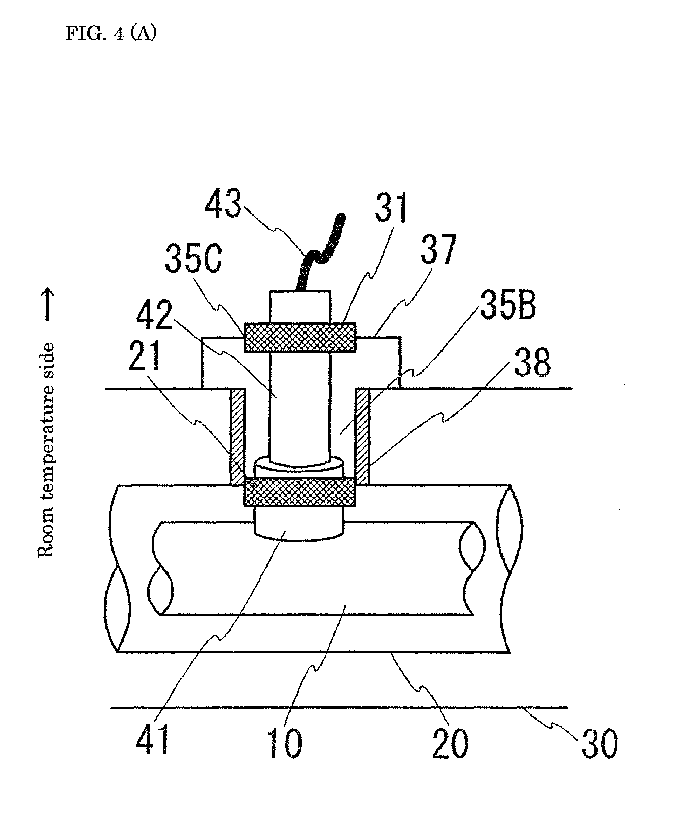

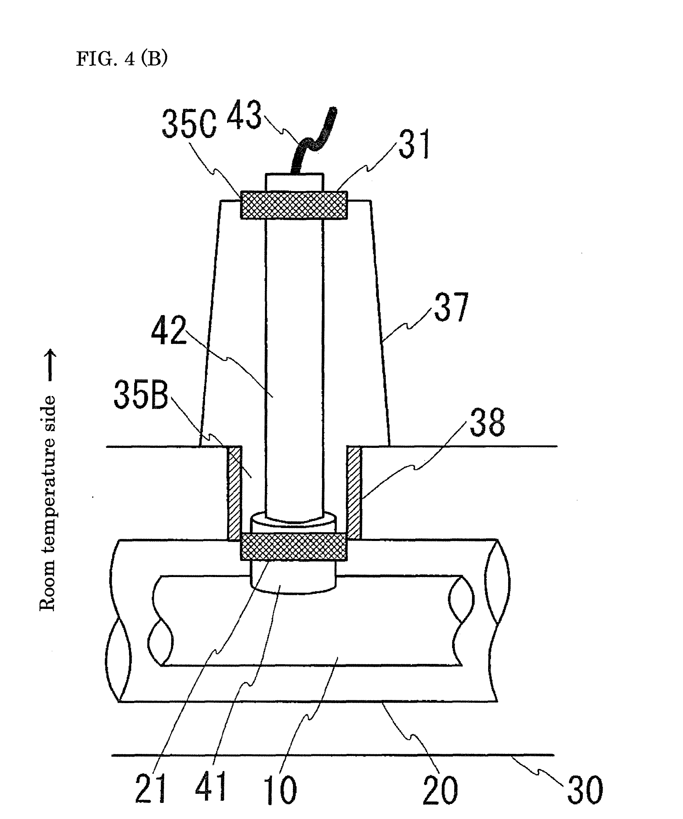

( In this Example 3, an example will be described in which an auxiliary thermal insulation vessel is provided separately in addition to the vacuum thermal insulation vessel described in Example 2 above. Figures 4(A) and 4(B) are schematic views of an electric power feed structures according to the present invention, respectively showing an example in which the auxiliary thermal insulation vessel is provided such that a room-temperature side conductor can be inserted therein. Specifically, Fig. 4(A) shows the case where the length of the room-temperature side conductor is short, and Fig. 4(B) shows the case where the length of the room-temperature side conductor is long. The electric power feed structure of the present invention shown in this Example 3 has a structure basically similar to that of Example 2 but different from Example 2 in that in addition to an insertion hole 35B formed extending from the surface of the vacuum thermal insulation vessel 30 to the coolant vessel 20, an auxiliary thermal insulation vessel 37 is provided so as to hold the inner space of the insertion hole 35B in a vacuum state. The following description is made primarily of those different points.

In this Example 3, the insertion hole 35B was formed as follows. A tubular member capable of allowing the cryogenic-temperature side conductor 41 and the room-temperature side conductor 42 to be inserted therein was prepared. A hole matching with the opening of the tubular member was formed in the wall of the vacuum thermal insulation vessel 30 and the coolant vessel 20, respectively. A pipe made of stainless steel having superior strength was employed as the tubular member. The tubular member was disposed between the vacuum thermal insulation vessel 30 and the coolant vessel 20. Then, the opening at one end of the tubular member was fixedly coupled by welding, etc. to the hole in the wall of the vacuum thermal insulation vessel 30, and the opening at the other end of the tubular member was fixedly coupled by welding, etc. to the hole in the wall of the coolant vessel 20, whereby the insertion hole 35B was formed. In this Example 3, a coating layer 38 made of a material having a low thermal conductivity, e.g., FRP, was formed at the outer circumference of the insertion hole 35B, that is, at the side to be arranged in the wall of the vacuum thermal insulation vessel 30, so that the heat conduction toward the coolant vessel 20 and the vacuum thermal insulation vessel 30 can be reduced.

The cryogenic-temperature side conductor 41 is fixed to the coolant vessel side in the insertion hole 35B. More specifically, one end of the cryogenic-temperature side conductor 41 is positioned in the coolant vessel 20, and the other end thereof is positioned in an inner space of the insertion hole 35B (i.e., within the auxiliary thermal insulation vessel 37) which is located outside the coolant vessel 20. In this Example 3, a cryogenic-temperature side sealing portion 21 made of a material having superior thermal insulation and electrical insulation, e.g., FRP, is provided around the cryogenic-temperature side conductor 41 to prevent the coolant from leaking from the coolant vessel 20 to the inner space of the insertion hole 35B (i.e., within the auxiliary thermal insulation vessel 37), to prevent the cryogenic-temperature side conductor 41 from being electrically connected to the coolant vessel 20 and the insertion hole 35B, and to reduce thermal conductivity in the vicinity of the insertion hole 35.

Further, the auxiliary thermal insulation vessel 37 is provided to hold the inner space of the insertion hole 35B in a vacuum state. In this Example 3, the auxiliary thermal insulation vessel 37 is structured such that one part thereof includes the inner space of the insertion hole 35B and the other part thereof protrudes from the surface of the vacuum thermal insulation vessel 30 as shown in Fig. 4(B). The auxiliary thermal insulation vessel 37 is made of stainless steel as in the case of the vacuum thermal insulation vessel 30, and the protruding part of the auxiliary thermal insulation vessel 37 that protrudes from the vacuum thermal insulation vessel 30 is fixed to the vessel 30 by welding. A second insertion hole 35C through which the room-temperature side conductor 42 can be inserted is formed in the above-mentioned protruding part of the auxiliary thermal insulation vessel 37. For connecting the room-temperature side conductor 42 to the cryogenic-temperature side conductor 41, the room-temperature side conductor 42 is inserted through the second insertion hole 35C, and after the connection, the room-temperature side conductor 42 is fixed in place. Therefore, the auxiliary thermal insulation vessel 37 is present around the room-temperature side conductor 42 thus fixed, except for the portion thereof that is positioned in the exterior having room temperature. At a position where the room-temperature side conductor 42 is fixed, a room-temperature side sealing portion 31 is provided for the purpose of, e.g., maintaining the vacuum state of the vacuum thermal insulation vessel 30 as in Examples 1 and 2. In the case of disconnecting the room-temperature side conductor 42 and the cryogenic-temperature side conductor 41 from each other, the room-temperature side conductor 42 is not kept fixed in the vacuum thermal insulation vessel 30 and is placed outside the vessel 30 as in Example 2. At that time, the second insertion hole 35C is closed by a cover (not shown) made of FRP, for example, to maintain the vacuum state of the vacuum thermal insulation vessel 30.

In the electric power feed structure of the present invention which has the above-described construction, the feed conductor part 40 is brought into conductive state by inserting the room-temperature side conductor 42 through the insertion hole 35B and the second insertion hole 35C and connecting it to the cryogenic-temperature side conductor 41, and the feed conductor part 40 is brought into non-conductive state by disconnecting the room-temperature side conductor 42 from the cryogenic-temperature side conductor 41. Accordingly, as in Examples 1 and 2, the electric power feed structure of the present invention makes it possible to easily change the conductor cross-sectional area in accordance with a demand and to prevent the excessive heat penetration.

In this Example 3, one feed conductor part is shown ; however, two feed conductor parts may be provided as in Examples 1 and 2, or three or more feed conductor parts may be provided. For connecting the room-temperature side conductor to the cryogenic-temperature side conductor, the connecting operation is performed after opening the cover of the second insertion hole and returning the interior of the auxiliary thermal insulation vessel to the state of room temperature and normal pressure (atmospheric pressure). After connecting the room-temperature side conductor and the cryogenic-temperature side conductor to each other and fixing the room-temperature side conductor to the auxiliary thermal insulation vessel, only the interior of the auxiliary thermal insulation vessel is evacuated to a predetermined degree of vacuum. Likewise, for disconnecting the room-temperature side conductor and the cryogenic-temperature side conductors from each other, only the interior of the auxiliary thermal insulation vessel is first returned to the state of room temperature and normal pressure and then evacuated to the vacuum state. In this Example 3, unlike Example 2, since the auxiliary thermal insulation vessel is provided separately in addition to the vacuum thermal insulation vessel, it is just required to evacuate the auxiliary thermal insulation vessel in which the vacuum state has been broken for attaching or detaching operation in the feed conductor part, while the vacuum thermal insulation vessel 30 can be kept in the vacuum stat. Preferably, the size of the auxiliary thermal insulation vessel is changed according to the size and length of the feed conductor part. For example, when the room-temperature side conductor 42 is short, the length of the auxiliary thermal insulation vessel 37 (i.e., the length of its part protruding from the vacuum thermal insulation vessel 30 in Fig. 4) is designed to be short as shown in Fig. 4(A). When the room-temperature side conductor 42 is long, the length of the auxiliary thermal insulation vessel 37 (i.e., the length of its part protruding from the vacuum thermal insulation vessel 30 in Fig. 4) is designed to be long as shown in Fig. 4(B).

### (APPLICATION EXAMPLE 1)

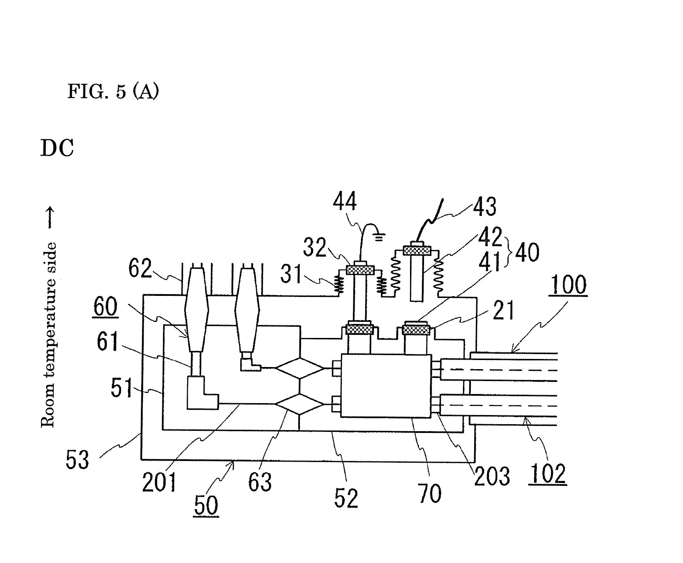

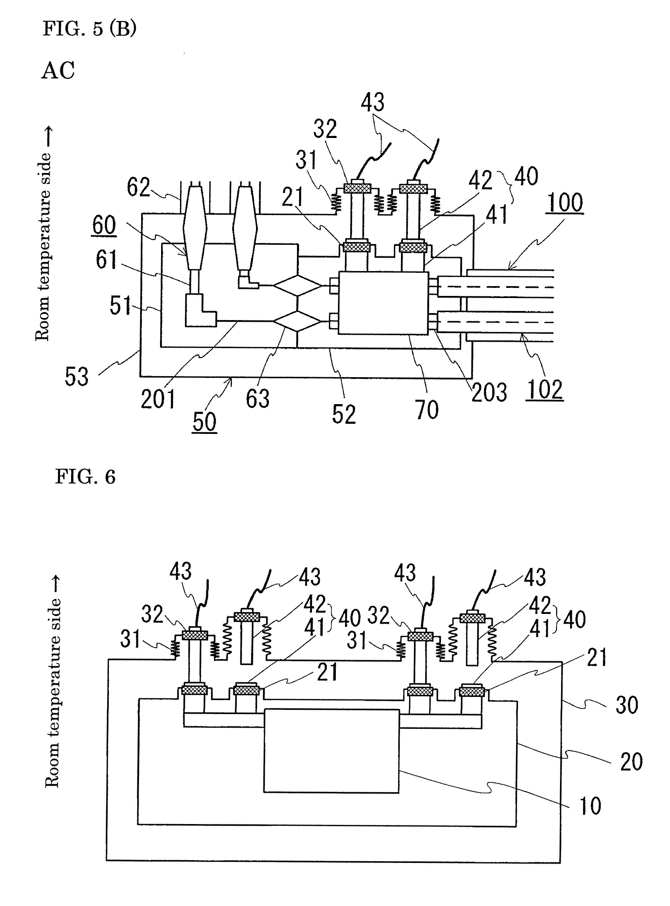

The following is an explanation of one application example of the electric power feed structure described above as Example 1 of the present invention. This Application Example 1 represents the case where the electric power feed structure according to the present invention is formed as a termination structure for a superconducting cable line. Figures 5(A) and 5(B) are schematic views of a termination portion of a superconducting cable line in which an electric power feed structure according to the present invention is provided. Specifically, Fig. 5(A) shows the case of an AC power transmission line, and Fig. 5(B) shows the case of a DC power transmission line.

In Application Example 1, a power line constituted by a superconducting cable of the three-core in one cryostat type shown in Fig. 7 was employed. That is, a superconducting cable 100 containing three cable cores 102 in a thermal insulated pipe 101 was used. Each core 102 comprises a former 200, a first superconducting layer 201, an electrical insulation layer 202, a second superconducting layer 203, and a protection layer 204, which are arranged in this order from the center. The first superconducting layer 201 and the second superconducting layer 203 are each made of a superconducting material, e.g., a bismuth-based oxide. The thermal insulated pipe 101 has a double-wall structure comprising an outer pipe 101a and an inner pipe 101b, both of which are corrugated pipes made of stainless steel. The space between the pipes 101a and 101b is evacuated to a predetermined degree of vacuum and is provided with a thermal insulation layer made of a thermal insulation material, e.g., Superinsulation (trade name of a multi-layer thermal insulation). A space 103 within the inner pipe 101b serves as a coolant channel for flowing a coolant, e.g., liquid nitrogen, so as to cool the first superconducting layer 201 and the second superconducting layer 203. An anticorrosive layer 104 is coated over an outer periphery of the thermal insulated pipe 101. Note that only the two cable cores 102 are shown in Figs. 5(A) and 5(B), but the three cores are present in fact.

A termination structure such as shown in Fig. 5(A) or 5(B) is formed in the termination part of the cable line using the superconducting cable 100. The termination structure comprises the end of the superconducting cable 100 and a termination box 50 containing the cable end. The termination box 50 includes termination coolant vessels 51 and 52 in which the ends of the cores 102 are contained and a termination vacuum thermal-insulation vessel 53 disposed so as to surround outer peripheries of the termination coolant vessels 51 and 52. The end of each core 102 is stripped off in a stepwise manner to expose the first superconducting layer 201 and the second superconducting layer 203 in sequential order, and the exposed layers 201 and 203 are introduced to the termination coolant vessels 51 and 52, respectively. In this Application Example 1, a bushing 60 having a built-in lead portion 61 made of an electrically conductive material, e.g., copper, is connected to the first superconducting layer 201. A porcelain tube 62 is disposed at the room temperature side of the bushing 60. Additionally, an epoxy unit 63 is disposed around a portion of the first superconducting layer 201 which is positioned near the boundary between the termination coolant vessel 51 and the termination coolant vessel 52. A connection conductor made of a normal electrically conductive material, e.g., copper, may be connected to the first superconducting layer 201, and the connection conductor may be introduced to the termination coolant vessel 51 and connected to the lead portion 61 of the bushing 60. The foregoing construction is similar to the known one. The feature of this Application Example 1 resides in that the feed conductor 40 having the above-described split structure is provided for the second superconducting layer 203. In this Application Example 1, the feed conductor part 40 is disposed at a short-circuit portion 70 through which the second superconducting layers 203 of the three cores are connected. In the case of Figs. 5(A) and 5(B), two feed conductor parts are provided ; however, the number of the feed conductor parts may be one or three or more.

When the superconducting cable line with the above-described construction is used in the form of, e.g., a three-phase AC line, the first superconducting layer 201 of each core 102 is used as a superconducting conductor, and the second superconducting layer 203 of each core is used as a superconducting shielding layer. In the case of AC power transmission, therefore, the second superconducting layer 203 must be grounded. Therefore, as shown in Fig. 5(A), the cryogenic-temperature side conductor 41 and the room-temperature side conductor 42 in the feed conductor part 40 that is selected to be grounded are connected to each other, while the cryogenic-temperature side conductor 41 and the room-temperature side conductor 42 in the unnecessary feed conductor part 402 are disconnected from each other. In this Application Example 1, the grounding is done by connecting a grounding conductor 44 to the room-temperature side conductor 42 of the connected feed conductor part 40. In the AC power transmission, only the termination structure at one end of the line is required to be grounded, and therefore the feed conductor part 40 provided in the termination structure at the other end is disconnected and held in the non-conductive state.

The following is a case where the conversion from the three-phase AC power transmission shown in Fig. 5(A) to monopole DC power transmission is requested. In such case, it is assumed, for example, that the first superconducting layer 201 of one core in the superconducting cable 100 is used as an outward line, the second superconducting layer 203 of the same core is used as a return line, and the remaining two cores are used as spare lines. In such case, the magnitude of the current that will flow through the second superconducting layer 203 used as a return line is equal to that of a current flowing through the first superconducting layer 201 used as an outward line. In other words, the current that will flow through the second superconducting layer 203 is larger as compared with the case of the AC power transmission shown in Fig. 5(A). Therefore, an effective conductor cross-sectional area sufficient for allowing the required current to flow can be obtained by connecting the cryogenic-temperature side conductor 41 and the room-temperature side conductor 42 together, as shown in Fig. 5(B), in the feed conductor part 40, in which they have been disconnected from each other in the case of the AC power transmission. Also, in the case of the DC power transmission, the feed conductor parts must be brought into conductive state at the opposite ends of the line. Therefore, the feed conductor part that has been held in non-conductive state at the other end is also brought into conductive state.

In contrast, when conversion from the DC power transmission shown in Fig. 5(B) to the AC power transmission is requested, the cryogenic-temperature side conductor 41 and the room-temperature side conductor 42 in one feed conductor part 40 are connected together so as to be brought into conductive state, thereby giving an effective conductor cross-sectional area required for grounding, while the conductors 41 and 42 in the other feed conductor part are disconnected from each other. In other words, one of the feed conductor parts that have been held in the conductive state in the DC power transmission is disconnected so as to be in non-conductive state.

Thus, by utilizing the electric power feed structure of the present invention, it is possible to easily perform the conversion from the DC power transmission to the AC power transmission or from the AC power transmission to the DC power transmission. Also, the cryogenic-temperature side conductor and the room-temperature side conductor of the unnecessary feed conductor are disconnected from each other, whereby the heat penetration through the disconnected feed conductor can be prevented.

In this Application Example 1, an explanation has been made with respect to the monopole power transmission; however, it can of course be converted to bipolar DC power transmission. For performing the bipolar power transmission, for example, the first superconducting layer 201 of one core is used as a positive line, and the first superconducting layer 201 of another core is used as a negative line, whereas the second superconducting layers 203 of those two cores are used as neutral lines, and the remaining core is used as a spare line. In this case, an unbalanced current flows through the second superconducting layer 203. Accordingly, the feed conductor is selectively attached or detached so as to provide an effective conductor cross-sectional area required for allowing the unbalanced current to flow.

Also, in this Application Example 1, an explanation has been given above with respect to structures in which the feed conductor part is provided only in the second superconducting layer; however, the feed conductor part may be provided only in the first superconducting layer, or may be provided in both the first superconducting layer and the second superconducting layer. In the case where the feed conductor part is provided only in the first superconducting layer, such line can be used as the AC power transmission line, for example, in which the desired effective conductor cross-sectional area can be ensured by selectively attaching or detaching the feed conductor part in accordance with an increase or decrease of the demanded electric power. Also, in the case where the feed conductor part is provided in both of the first and second superconducting layers, such line can be used as the DC power transmission line, for example, and the desired effective conductor cross-sectional area can be ensured by selectively attaching or detaching the feed conductor part connected to the first superconducting layer and the feed conductor part connected to the second superconducting layer in accordance with an increase or decrease of the demanded electric power.

Furthermore, in this Application Example 1, an explanation has been given above with respect to the termination structure of a superconducting cable line ; however, the electric power feed structures of Examples 1 to 3 may be selectively connected to the first superconducting layer and/or the second superconducting layer at an arbitrary middle position of the line so that electric power can be fed from the arbitrary position of the line.

### (APPLICATION EXAMPLE 2)

Another example of application of the electric power feed structure described in Example 1 of the present invention will be described below. This Application Example 2 represents the case where the electric power feed structure according to the present invention is provided in a superconducting transformer. Figure 6 is a schematic view of a superconducting transformer provided with the electric power feed structure according to the present invention. The superconducting transformer comprises a superconducting section 10 (superconducting coil), a coolant vessel 20 in which the superconducting section 10 is contained, and a vacuum thermal insulation vessel 30 arranged so as to surround the outer periphery of the coolant vessel 20. In the superconducting coil, the feed conductor part 40 shown in Example 1 is provided at each position where the input/ output of electric power is done between the cryogenic temperature side and the room temperature side. With that construction, an effective conductor cross-sectional area can be changed by controlling the respective connected state of feed conductor part 40 in accordance with a current to be supplied to the superconducting coil or a current to be fed from the superconducting coil. Also, the heat penetration through the disconnected feed conductor can be prevented by disconnecting the cryogenic-temperature side conductor and the room-temperature side conductor from each other in the unnecessary feed conductor part. In this Application Example 2, an explanation is given with respect to an example in which two feed conductor parts are provided for each of the place where electric power is supplied from the room-temperature side to the cryogenic-temperature side and the place where electric power is supplied from the cryogenic-temperature side conductor to the room-temperature side (i.e., the case of providing four feed conductor parts in total of both places); however, the feed conductor part may be provided only one at each place (i.e., two in total of both places) or three or more at each place (i.e., six or more in total of both places).

### Industrial Applicability

The electric power feed structure of the present invention is preferably formed at a position where the transfer of electric power is performed between the cryogenic-temperature side conductor and the room-temperature side in a superconducting apparatus. The superconducting apparatus to which the electric power feed structure can be applied is, for example, a superconducting cable, a superconducting magnetic energy storage device, a superconducting fault current limiter, a superconducting transformer, etc. Also, the electric power feed structure of the present invention can be formed as a termination structure in a superconducting cable line for DC power transmission or AC power transmission, or can be provided at an arbitrary middle position of the cable line. In the superconducting cable line provided with the electric power feed structure of the present invention, it is possible to easily perform the conversion from an AC power transmission line to a DC power transmission line or from the DC power transmission line to the AC power transmission line. Furthermore, the superconducting cable line can easily be adapted for a change of the transmission and distribution route as well as a change of the demanded electric power.

## Claims

1. An electric power feed structure for a superconducting apparatus, which is used to input or output electric power between the cryogenic-temperature side and the room-temperature side, the electric power feed structure comprising :
a coolant vessel containing a superconducting section provided in said superconducting apparatus;
a vacuum thermal insulation vessel arranged to surround an outer periphery of said coolant vessel ; and
a feed conductor part having one end arranged in the room temperature side and having the other end connected to said superconducting section, the feed conductor part being able to establish electrical conduction between the cryogenic temperature side and the room temperature side, ,
wherein said feed conductor part comprises a cryogenic-temperature side conductor connected to said superconducting section and a room-temperature side conductor arranged in the room temperature side, and wherein said cryogenic-temperature side conductor and said room-temperature side conductor can be detachably attached to each other.

2. An electric power feed structure for a superconducting apparatus according to claim 1, wherein a plurality of said feed conductor parts are provided.

3. An electric power feed structure for a superconducting apparatus according to claim 1 or 2, wherein
one end of said cryogenic-temperature side conductor is connected to the superconducting section and the other end is positioned in said vacuum thermal insulation vessel,
one end of said room-temperature side conductor is positioned in said vacuum thermal insulation vessel and the other end is positioned in the exterior having room temperature, said room-temperature side conductor being capable of being detachably attached to said cryogenic-temperature side conductor while said vacuum thermal insulation vessel is maintained in a vacuum state; and wherein
said vacuum thermal insulation vessel is provided with an expendable/shrinkable portion capable of expanding and contracting in accordance with the detachment/ attachment of said cryogenic-temperature side conductor and said room-temperature side conductor.

4. An electric power feed structure for a superconducting apparatus according to claim 1 or 2,
wherein one end of said cryogenic-temperature side conductor is connected to the superconducting section and the other end is positioned outside said coolant vessel, and
wherein said vacuum thermal insulation vessel is provided with an insertion hole through which said room-temperature side conductor can be inserted.

5. An electric power feed structure for a superconducting apparatus according to claim 4, wherein said insertion hole is formed extending from a surface of said vacuum thermal insulation vessel to said coolant vessel, and
wherein said vacuum thermal insulation vessel is provided with an auxiliary thermal insulation vessel for holding the inner space of said insertion hole in a vacuum state.

6. An electric power feed structure for a superconducting apparatus according to any one of claims 1 to 5, wherein said room-temperature side conductor is a rod-shaped member, and said cryogenic-temperature side conductor is a tubular member capable of engaging said room-temperature side conductor; and
wherein at least either one of said cryogenic-temperature side conductor and said room-temperature side conductor is provided with a resilient contact piece for bringing said cryogenic-temperature side and said room-temperature side conductor into contact with each other when said room-temperature side conductor is fitted to said cryogenic-temperature side conductor.

7. An electric power feed structure for a superconducting apparatus according to any one of claims 1 to 6, wherein said room-temperature side conductor is a rod-shaped member and the cross-sectional area thereof partially differs in a longitudinal direction.

8. The electric power feed structure for the superconducting apparatus according to any one of Claims 1 to 7, wherein said superconducting apparatus is a superconducting cable.

9. An electric power feed structure for a superconducting apparatus according to claim 8, wherein said superconducting section comprises a first superconducting layer and a second superconducting layer that is arranged coaxially with respect to said first superconducting layer, with an electrical insulation layer being disposed around said first superconducting layer,
wherein said feed conductor part is provided in at least one of said first superconducting layer and said second superconducting layer.

10. A superconducting cable line provided with an electric power feed structure set forth in claim 8 or 9.
